(19) **Europäisches Patentamt**

**European Patent Office**

**Office européen des brevets**

(11) Veröffentlichungsnummer: **0 199 011 B1**

(12) **EUROPÄISCHE PATENTSCHRIFT**

(45) Veröffentlichungstag der Patentschrift: **31.07.91**

(51) Int. Cl.⁵: **C08F 8/44**, C08F 210/02,
//(C08F210/02,220:06)

(21) Anmeldenummer: **86102197.0**

(22) Anmeldetag: **20.02.86**

(54) Verfahren zur Herstellung eines ionisch vernetzten Ethylencopolymerisates.

(30) Priorität: **26.02.85 DE 3506685**

(43) Veröffentlichungstag der Anmeldung:
**29.10.86 Patentblatt 86/44**

(45) Bekanntmachung des Hinweises auf die
Patenterteilung:
**31.07.91 Patentblatt 91/31**

(84) Benannte Vertragsstaaten:
**AT BE DE FR GB NL**

(56) Entgegenhaltungen:
**US-A- 3 264 272**
**US-A- 4 420 580**

(73) Patentinhaber: **BASF Aktiengesellschaft**
**Carl-Bosch-Strasse 38**
**W-6700 Ludwigshafen(DE)**

(72) Erfinder: **Ziegler, Walter, Dr.**
**Starenweg 15**
**W-6803 Edingen-Neckarhausen(DE)**
Erfinder: **Brandstetter, Franz, Dr.**
**Ritterbueschel 45**
**W-6730 Neustadt(DE)**
Erfinder: **Weiss, Frank, Dr.**
**Rossdorfer Str. 77**
**W-6100 Darmstadt(DE)**
Erfinder: **Schlemmer, Lothar**
**Duisbergstr. 1a**
**W-6701 Maxdorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von ionisch vernetzten Ethylencopolymerisaten durch Mischen von Ethylencopolymerisaten (I), die 0,1 bis 20 Mol.-% $\alpha,\beta$-ethylenisch ungesättigte Carbonsäuren oder $\alpha,\beta$-ethylenisch ungesättigte, Carboxylgruppen liefernde Comonomere einpolymerisiert enthalten, mit einem Metallsalz der Kohlensäure bei Temperaturen oberhalb der Schmelzpunkte der Ethylencopolymerisate.

Bei derartigen Verfahren werden thermoplastische Ethylencopolymerisate mit carboxylgruppenhaltigen Monomeren, von denen ein Teil als freie Carboxylgruppe vorliegt, der Rest mit Metallkationen gebunden ist, erhalten, so daß eine gewisse Quervernetzung erreicht wird.

Aus der US-A-3,264,272 ist bereits ein Verfahren zum Modifizieren von Carboxylgruppen enthaltenden Ethylencopolymerisaten mit Metallsalzen, wie Formiate, Acetate, Hydroxide, Methoxide, Ethoxide, Nitrate, Carbonate und Bicarbonate bekannt. Hierbei wird die Vernetzung so durchgeführt, daß man das Ethylencopolymerisat mit der Metallverbindung in der Schmelze mischt oder einer Lösung des Ethylencopolymerisats zuführt. Im Falle der Schmelzemischung mit den unlöslichen Metallsalzen der Kohlensäure gelangt man zu ionisch vernetzten Produkten, deren Homogenität aber noch zu wünschen übrig läßt.

In der US-A-3,404,134 ist ein Verfahren zur ionischen Vernetzung von Copolymerisaten des Ethylens beschrieben, wobei im Falle von Metallkationen liefernden Substanzen, die bei Reaktionsbedingungen im wesentlichen unlöslich sind, das Material durch Zugabe einer Säure, wie Essigsäure in eine lösliche Form gebracht wird. Des weiteren wird in der US-A-3,969,434 ein Verfahren zur ionischen Vernetzung von Ethylencopolymerisaten vorgeschlagen, wobei im wesentlichen eine Kombination aus einer wasserunlöslichen Zinkverbindung wie Zinkoxid, Zinkhydroxid, Zinkcarbonat und Gemische dieser Verbindungen und eines Salzes einer flüchtigen organischen Säure, wie Zinkformiat, Zinkacetat oder Zinkpropionat eingesetzt wird. Bei den beiden letztgenannten Verfahren treten an den Mischaggregaten im verstärkten Maße Korrosion auf.

Aufgabe der vorliegenden Erfindung war es, ein Verfahren zur Herstellung von ionisch vernetzten Copolymerisaten des Ethylens aufzufinden, bei dem man auf herkömmlichen Mischaggregaten ohne speziellen Schutz gegen Korrosion zu Produkten mit befriedigender Homogenität kommt und bei denen ein sehr niedriger Geruchspegel erreicht wird.

Diese Aufgabe wurde durch ein Verfahren zur Herstellung von ionisch vernetzten Ethylencopolymerisaten durch Mischen von Ethylencopolymerisaten (I), die 0,1 bis 20 Mol-% $\alpha,\beta$-ethylenisch ungesättigte Carbonsäuren oder $\alpha,\beta$-ethylenisch ungesättigte, Carboxylgruppen liefernde Comonomere einpolymerisiert enthalten, mit einem Metallsalz der Kohlensäure bei Temperaturen oberhalb der Schmelzpunkte der Ethylencopolymerisate, bei dem die Vernetzung des Ethylencopolymerisats (I) mit einer Mischung bestehend aus dem Metallsalz der Kohlensäure mit 1-, 2- oder 3-wertigen Ionen von Metallen der 1., 2., 3., 4. oder 8. Gruppe des Periodensystems und einem Copolymerisat (II) aus Ethylen und einem $C_3$- bis $C_4$-Alkencarbonsäure-$C_1$- bis $C_8$-alkylester durchgeführt wird, gelöst.

Als Ethylencopolymerisate (I), kommen Copolymerisate des Ethylens, die 0,1 - 20 Mol.-%, vorzugsweise 0,5 - 10 Mol.-%, bezogen auf das Copolymerisat, $\alpha,\beta$-ethylenisch ungesättigte Carbonsäuren oder $\alpha,\beta$-ethylenisch ungesättigte, Carboxylgruppen liefernde Comonomere einpolymerisiert enthalten in Frage. Unter $\alpha,\beta$-ethylenisch ungesättigten Carbonsäuren werden dabei die üblichen, mit Ethylen copolymerisierbaren Carbonsäuren wie Acrylsäure, Methacrylsäure, Itakonsäure, Maleinsäure oder Fumarsäure verstanden. $\alpha,\beta$-ethylenisch ungesättigte, Carboxylgruppen liefernde Comonomere sind beispielsweise Methylhydrogenmaleinat, Maleinsäureanhydrid, tert.-Butylacrylat etc., d.h. Comonomere, die während oder nach der Reaktion z.B. durch Hydrolyse und/oder Pyrolyse in Carboxylgruppen enthaltende Comonomere umgesetzt werden. Die Ethylencopolymerisate können neben den $\alpha,\beta$-ethylenisch ungesättigten Carbonsäuren noch andere mit Ethylen copolymerisierbare Monomere einpolymerisiert enthalten (vgl. EP-A1-106 999). Hierbei kommen insbesondere in Frage Ester der (Meth)acrylsäure, Mono- und Diester der Maleinsäure und Fumarsäure, Amide monoethylenisch ungesättigter Carbonsäuren, insbesondere (Meth)acrylsäureamid sowie N-Mono- und N,N-Dialkylamide der (Meth)acrylsäure. Die Ethylencopolymerisate sind an sich bekannt und beispielsweise in den Literaturstellen US-A-3,520,861, US-A-3,201,374, US-A-3,350,372 und GB-A-2,091,745 beschrieben. Die Schmelzindices der Ethylencopolymerisate (I) liegen im allgemeinen im Bereich von 0,1 - 500 g/10', gemessen bei 190° C und 2,16 kp nach DIN 53 735. Bevorzugt sind Produkte mit einem Schmelzindex von 5 - 80 g/10'. Die Schmelzpunkte der Ethylencopolymerisate(I) liegen im Bereich von 70 bis 115° C.

Bei den für die Vernetzung verwendeten Metallsalzen der Kohlensäure handelt es sich um Salze der 1-, 2- und 3-wertigen Ionen von Metallen der Gruppe 1, 2, 3, 4 und 8 des periodischen Systems der Elemente (vgl. Handbook of Chemistry and Physics, Chemical Rubber Publishing Company, 37. Ausgabe, Seite 392). Geeignete einwertige Metallionen sind dabei Kalium, Natrium, Lithium oder Kupfer. Geeignete zweiwertige Metallionen sind Magnesium, Kalzium, Zink oder Barium. Bevorzugt werden die Metallsalze der Kohlensäure mit Natrium bzw. Zink eingesetzt. So kommen beispielsweise in Frage Natriumhydrogencarbonat, Natriumcarbonat oder Zinkcarbonat. Es sind aber auch Mischungen von verschiedenen Salzen mit den Metallsalzen der Kohlensäure möglich, wobei aber mindestens 30 Gew.-% das Metallsalz der Kohlensäure darstellen. Es sind auch geeignet basische Carbonate wie Zinkhydroxidcarbonat.

Als Ethylencopolymerisat (II), das erfindungsgemäß in Mischung mit dem Metallsalz der Kohlensäure zur ionischen Vernetzung eingesetzt wird, verwendet man ein Copolymerisat des Ethylens mit einem $C_3$- bis $C_4$-Alkencarbonsäure-$C_1$- bis $C_8$-alkylester. Dieses Ethylen-Alkencarbonsäureester-Copolymerisat enthält üblicherweise 2 bis 12 Mol.-% des ungesättigten Esters einpolymerisiert. Bevorzugt handelt es sich hierbei um die Ethylen-(Meth)acrylsäure-$C_1$- bis $C_8$-alkylester-Copolymerisate, insbesondere um Ethylen-Ethylacrylat-, Ethylen-n-Butylacrylat- oder Ethylen-Ethylhexylacrylat-Copolymerisate. Es können aber auch Mischungen aus verschiedenen Estern der Acryl- oder Methacrylsäure verwendet werden. Die Ethylencopolymerisate (II) sind an sich bekannt und beispielsweise in den Druckschriften US-A-3,350,372, GB-A-2,091,745 und US-A-3,201,374 beschrieben. Sie haben Schmelzindices von kleiner als 1000 g/10', vorzugsweise im Bereich von 6 bis 150 g/10', insbesondere 8 bis 40 g/10', gemessen nach DIN 53 735 bei 190 °C und 2,16 kp.

Die Herstellung der Mischung des Metallsalzes der Kohlensäure und des Ethylencopolymerisats (II) kann auf den üblichen gängigen Mischaggregaten, die eine homogene Mischung ermöglichen, erfolgen. So sind beispielsweise geeignet Extruder oder Kneter. Im bevorzugten Verfahren wird ein Zweiwellenextruder angewandt. Die Herstellung der Mischung erfolgt dabei bei Temperaturen oberhalb des Schmelzpunktes der Ethylencopolymerisate(I) und (II). Im allgemeinen sind das Temperaturen oberhalb von 130 °C, insbesondere von 140 bis 180 °C.

Die Mischung aus dem Metallsalz der Kohlensäure und dem Ethylencopolymerisat (II) soll bevorzugt 10 bis 50 Gew.-% Metallsalz und 90 bis 50 Gew.- % Copolymerisat (II) enthalten. Insbesondere bevorzugt ist ein Mischungsverhältnis von 20 bis 40 Gew.-% Metallsalz und 80 bis 60 Gew.-% Ethylencopolymerisat (II).

Zur Herstellung der ionisch vernetzten Ethylencopolymerisate wird die erhaltene Mischung aus Metallsalz der Kohlensäure und Ethylencopolymerisat (II) in üblichen Vorrichtungen mit dem Ethylencopolymerisat (I) gemischt. Besonders geeignet sind hierbei Extruder und Kneter. Das bevorzugte Mischorgan ist ein Zweiwellenextruder. Die Mischungstemperaturen sollen oberhalb der Schmelztemperaturen der Ethylencopolymerisate (I) und (II) liegen und sind oberhalb von 130 °C, insbesondere zwischen 150 und 230 °C. Das Mischungsverhältnis von Ethylencopolymerisat (I) und Mischung aus Metallsalz der Kohlensäure und Ethylencopolymerisat(II) kann in weiten Grenzen variieren. Bevorzugt ist ein Verfahren, bei dem das Copolymerisat(I) mit einer Menge der Mischung aus Metallsalz und Copolymerisat(II) vermischt wird, die genügend Kationen zur Neutralisation von mindestens 10 Mol.-% der Carboxylgruppen des Copolymerisats(I) aufweist. In die ionisch vernetzten Ethylencopolymerisate können noch andere übliche Zusatzstoffe wie Füllstoffe, Antioxydantien, Flammschutzmittel ect. in üblichen Mengen eingemischt werden.

Das in der vorliegenden Erfindung beschriebene Verfahren zur Herstellung von ionisch vernetzten Ethylencopolymerisaten besitzt den Vorteil, daß Mischaggregate mit üblichen nicht speziell gegen Korrosion ausgerüsteten Materialien verwendet werden können, da während der Herstellung keine Korrosionsschäden, die sich in Verfärbungen des vernetzten Ethylencopolymerisates äußern, auftreten. Das weiteren besitzen die Produkte eine hohe Transparenz, das heißt sie sind homogen. Das Verfahren besitzt den weiteren Vorteil, daß ein niedriger Geruchspegel erreicht wird.

## Patentansprüche

1. Verfahren zur Herstellung von ionisch vernetzten Ethylencopolymerisaten durch Mischen von Ethylencopolymerisaten (I), die 0,1 bis 20 Mol.-% $\alpha,\beta$-ethylenisch ungesättigte Carbonsäuren oder $\alpha,\beta$-ethylenisch ungesättigte, Carboxylgruppen liefernde Comonomere einpolymerisiert enthalten, mit einem Metallsalz der Kohlensäure bei Temperaturen oberhalb der Schmelzpunkte der Ethylencopolymerisate, dadurch gekennzeichnet, daß die Vernetzung des Ethylencopolymerisats (I) mit einer Mischung bestehend aus dem Metallsalz der Kohlensäure mit 1-, 2- oder 3-wertigen Ionen von Metallen der 1., 2., 3., 4. oder 8. Gruppe des Periodensystems und einem Copolymerisat (II) aus Ethylen und einem $C_3$- bis $C_4$-Alkencarbonsäure-$C_1$- bis $C_8$-alkylester durchgeführt wird.

2. Verfahren nach Anspruch 1, dadurch gekennzeichnet, daß die Mischung 10 bis 50 Gew.-% Metallsalz und 90 bis 50 Gew.-% Copolymerisat (II) enthält.

3. Verfahren nach Anspruch 1, dadurch gekennzeichnet, daß das Copolymerisat (I) mit einer Menge der Mischung aus Metallsalz und Copolymerisat (II) vermischt wird, die genügend Kationen zur Neutralisation von mindestens 10 Mol.-% der Carboxylgruppen des Copolymerisats (I) aufweist.

4. Verfahren nach Anspruch 1, dadurch gekennzeichnet, daß des Ethylen-Alkencarbonsäureester-Copolymerisat (II) 2 bis 12 Mol.-% Ester einpolymerisiert enthält.

5. Verfahren nach Anspruch 1, dadurch gekennzeichnet, daß (II) ein Ethylen(Meth)acrylsäure-$C_1$- bis $C_8$-alkylester-Copolymerisat ist.

6. Verfahren nach Anspruch 1, dadurch gekennzeichnet, daß das Copolymerisat (II) aus Ethylen und Estern der Acrylsäure mit Ethanol, n-Butanol oder Ethylhexanol besteht.

**Claims**

1. A process for preparing ionically crosslinked ethylene copolymers by mixing ethylene copolymers (I) which contain from 0.1 to 20 mol% of a,$\beta$-ethylenically unsaturated carboxylic acids or $\alpha$,$\beta$-ethylenically unsaturated carboxyl-supplying comonomers as copolymerized units with a metal salt of carbonic acid at above the melting points of the ethylene copolymers, which comprises carrying out the crosslinking of the ethylene copolymer (I) with a mixture composed of the metal salt of carbonic acid with 1-, 2- or 3-valent ions of metals of group 1, 2, 3, 4 or 8 of the periodic table and of a copolymer (II) of ethylene and a $C_3$- to $C_4$-alkenecarboxylic $C_1$- to $C_8$-alkyl ester.

2. A process as claimed in claim 1, wherein the mixture contains from 10 to 50% by weight of metal salt and from 90 to 50% by weight of copolymer (II).

3. A process as claimed in claim 1, wherein the copolymer (I) is mixed with an amount of the mixture of metal salt and copolymer (II) which has sufficient cations to neutralize not less than 10 mol% of the carboxyl groups in copolymer (I).

4. A process as claimed in claim 1, wherein the ethylene/alkenecarboxylic ester copolymer (II) contains from 2 to 12 mol% of ester as copolymerized units.

5. A process as claimed in claim 1, wherein (II) is an ethylene/(meth)acrylic $C_1$- to $C_8$-alkyl ester copolymer.

6. A process as claimed in claim 1, wherein the copolymer (II) is composed of ethylene and esters of acrylic acid with ethanol, n-butanol or ethylhexanol.

**Revendications**

1. Procédé de préparation de copolymères d'éthylène réticulés ioniquement par mélange de copolymères d'éthylène (I), qui contiennent en liaison polymère de 0,1 à 20% en mole d'acide carboxyliques insaturés $\alpha$,$\beta$-éthyléniquement ou de comonomères insaturés $\alpha$,$\beta$-éthyléniquement fournissant des groupements carboxyle, avec un sel métallique de l'acide carbonique à des températures supérieures au point de fusion des copolymères d'éthylène, caractérisé en ce que la réticulation du copolymère d'éthylène (I) est effectuée avec un mélange composé du sel métallique de l'acide carbonique avec des ions mono-, bi- ou trivalents de métaux des groupes I, II, III, IV ou VIII de la classification périodique des éléments et d'un copolymère (II) d'éthylène et d'un ester $C_1$-$C_8$-alkylique d'un acide $C_3$-$C_4$-alcènecarboxylique.

2. Procédé selon la revendication 1, caractérisé en ce que le mélange contient 10 à 50% en poids de sel métallique et 90 à 50% en poids de copolymère (II).

3. Procédé selon la revendication 1, caractérisé en ce que le copolymère (I) est mélangé avec une quantité du mélange de sel métallique et de copolymère (II) qui présente suffisamment de cations pour la neutralisation d'au moins 10% en moles des groupements carboxyle du copolymère (I).

4. Procédé selon la revendication 1, caractérisé en ce que le copolymère éthylène/ester d'acide alcènecarboxylique (II) contient de 2 a 12% en moles d'ester en liaison polymère.

5. Procédé selon la revendication 1, caractérisé en ce que (II) est un copolymère éthylène/ester $C_1$-$C_8$-alkylique d'acide (méth)acrylique.

6. Procédé selon la revendication 1, caractérisé en ce que le copolymère (II) se compose d'éthylène et d'esters de l'acide acrylique avec l'éthanol, le n-butanol ou l'éthylhexanol.